Europäisches Patentamt

European Patent Office

Office européen des brevets

(11) Veröffentlichungsnummer: **0 373 310**
**A1**

## (12) EUROPÄISCHE PATENTANMELDUNG

(21) Anmeldenummer: 89118373.3

(22) Anmeldetag: 04.10.89

(51) Int. Cl.⁵: **F03B 3/00, F03B 3/08**

(30) Priorität: 05.12.88 CH 4498/88

(43) Veröffentlichungstag der Anmeldung:
20.06.90 Patentblatt 90/25

(84) Benannte Vertragsstaaten:
**AT DE ES FR GB IT SE**

(71) Anmelder: **Helbling, Roman**
**Guggenbühlstrasse 16**
**CH-8404 Winterthur(CH)**

(72) Erfinder: **Helbling, Roman**
**Guggenbühlstrasse 16**
**CH-8404 Winterthur(CH)**

(74) Vertreter: **EGLI-EUROPEAN PATENT**
**ATTORNEYS**
**Horneggstrasse 4**
**CH-8008 Zürich(CH)**

(54) Verfahren und Einrichtung zur Umwandlung einer kinetischen Energie in ein Drehmoment.

(57) Die Einrichtung (100) umfasst im wesentlichen einen ersten und einen zweiten, kegelstumpfartig ausgebildeten Hohlkörper (90,50) oder einen einstückig ausgebildeten Hohlkörper (80) sowie einen ersten Leitschaufelkranz (25), einen zweiten Leitschaufelkranz (45) und mindestens eine Drosselstabgruppe (60,65), wobei die genannten Teile (90,50,65,60,25) im wesentlichen mit einer die beiden miteinander wirkverbundenen Hohlkörper (90,50) oder den einstückigen Hohlkörper (80) in axialer Richtung durchdringenden Welle (10) wirkverbunden sind.

Der im Bereich des kleineren Durchmessers des Hohlkörpers (90 oder 80) zur Abgabe der kinetischen Energie schräg tangential eingeleitete und dabei sich auffächernde Wasserstrahl (120) wird als peripherisch rotierende Wasserspirale (120') durch den Leitschaufelkranz (25) in eine einheitliche Richtung gebracht und anschliessend über die Drosselstabgruppe (60,65) geleitet und mit ausreichender Restenergie am grösseren Durchmesser des Hohlkörpers (50 oder 80) abgeleitet.

FIG. 2

FIG. 1

## Verfahren und Einrichtung zur Umwandlung einer kinetischen Energie in ein Drehmoment

Die Erfindung betrifft ein Verfahren und eine Einrichtung zur Energieumwandlung, insbesondere unter Verwendung eines im wesentlichen von einem zugeführten Wasserstrahl oder dergleichen rotierend angetriebenen Hohlkörpers, welcher mit einer um ihre Längsachse drehbar gelagerten Welle sowie mit entsprechend im Hohlkörper angeordneten Leit- und Drosselelementen zur Umwandlung einer kinetischen Energie in ein Drehmoment in Wirkverbindung steht.

Aus der DE-A 29 22 736 ist eine als Energieumwandler ausgebildete Einrichtung bekannt, welche im wesentlichen einen koaxial in einem Gehäuse angeordneten und auf einer Welle drehbar gelagerten Hohlkörper umfasst. Der zylindrisch ausgebildete und mit der Welle wirkverbundene Hohlkörper hat zwei in radialer Richtung von innen nach aussen spiralförmig ver laufende Kanäle, welchen Kanälen je eine im äusseren Bereich angeordnete Düse sowie jeweils ein Umlenkteil zugeordnet ist. Bei dieser Einrichtung wird dem zunächst in Rotation versetzten Hohlkörper über eine zentral angeordnete und mit den Kanälen in Verbindung stehende Nabe entsprechend Wasser zugeführt, welches beim Erreichen einer bestimmten Drehzahl im Endbereich der Kanäle eine bestimmte Zentrifugalkraft bewirkt, so dass ein an den Düsen austretender Strahl eine kinetische Energie auf die Umlenkteile abgibt, welche Energie im wesentlichen über den Hohlkörper auf die Welle übertragen und von dort als Drehmoment abgegeben wird.

Der Erfindung liegt die Aufgabe zugrunde, ein Verfahren und eine Einrichtung zur Durchführung des Verfahrens anzugeben, mittels welchem/welcher die im wesentlichen nach dem Prinzip einer sogenannten Freistrahl-Turbine arbeitende Einrichtung unter optimaler Ausnutzung der kinetischen Energie eines auf einen Körper gelenkten und entsprechend wirkenden Wasserstrahls sowie eine Umwandlung der kinetischen Energie in ein Drehmoment erreicht wird.

Das erfindungsgemässe Verfahren ist dadurch gekennzeichnet, dass der Wasserstrahl schräg tangential in den Hohlkörper eingeleitet und beim Aufprall auf eine entsprechend ausgebildete Innenwand des Hohlkörpers als eine rotierende, sich in axialer Richtung des Hohlkörpers bewegende Wasserspirale mindestens einem mit der Welle wirkverbundenen und zur Umwandlung der kinetischen Energie in ein Drehmoment ausgebildeten Leit- und/oder Drosselelement zugeführt und mit ausreichender Restenergie aus dem einen Hohlkörper oder aus einem mit dem ersten Hohlkörper wirkverbundenen zweiten Hohlkörper abgeleitet wird.

Die erfindungsgemässe Einrichtung zur Durchführung des Verfahrens umfasst einen zur Einleitung eines Wasserstrahls ausgebildeten und im wesentlichen mit einer um ihre Längsachse drehbar gelagerten Welle wirkverbundenen Hohlkörper und ist dadurch gekennzeichnet, dass der Hohlkörper kegelstumpfartig und im Bereich des kleineren Durchmessers zur schräg, tangentialen Einleitung des Wasserstrahls ausgebildet ist und in seinem Innenraum im Abstand zum Aufprallbereich des Wasserstrahls einen dem aufgefächerten Wasserstrahl eine einheitliche Richtung gebenden ersten Leitschaufelkranz sowie im Abstand dazu mindestens eine Drosselstabgruppe aufweist, wobei der Hohlkörper, der erste Leitschaufelkranz, die Drosselstabgruppe sowie ein zweiter Leitschaufelkranz als eine um die Längsachse der Welle rotierend angetriebene Baueinheit zur Abgabe eines Drehmoments ausgebildet sind.

Weitere Merkmale der Erfindung ergeben sich aus der folgenden Beschreibung in Verbindung mit der Zeichnung und den einzelnen Patentansprüchen.

Ein Ausführungsbeispiel der Erfindung wird nachstehend in Verbindung mit der Zeichnung beschrieben.

Es zeigt:

Fig. 1 eine schematisch und in perspektivischer Ansicht dargestellte Einrichtung zur Energieumwandlung,

Fig. 2 die teilweise im Schnitt und in Ansicht dargestellte Einrichtung gemäss Fig.1,

Fig. 3 ein gemäss der Linie III-III in Fig.2 in schematischer Ansicht dargestelltes Teilstück eines Leitschaufelkranzes für die Einrichtung gemäss Fig.1,

Fig. 4 den in schematischer Draufsicht dargestellten Leitschaufelkranz gemäss Fig.3,

Fig. 5 einen in grösserem Massstab dargestellten Ausschnitt des in Fig.2 durch einen Kreis A bezeichneten vorderen Wasserstrahl-Einleitbereichs der Einrichtung,

Fig. 6 eine schematisch und in Ansicht gemäss Pfeilrichtung VI in Fig.8 dargestellte Haltevorrichtung für eine Drosselstabgruppe der Einrichtung gemäss Fig.1 und 2,

Fig. 7 ein in Ansicht dargestelltes Teilstück der Haltevorrichtung gemäss Fig.6, und

Fig. 8 ein in Draufsicht dargestelltes Teilstück der Haltevorrichtung für die Drosselstabgruppe.

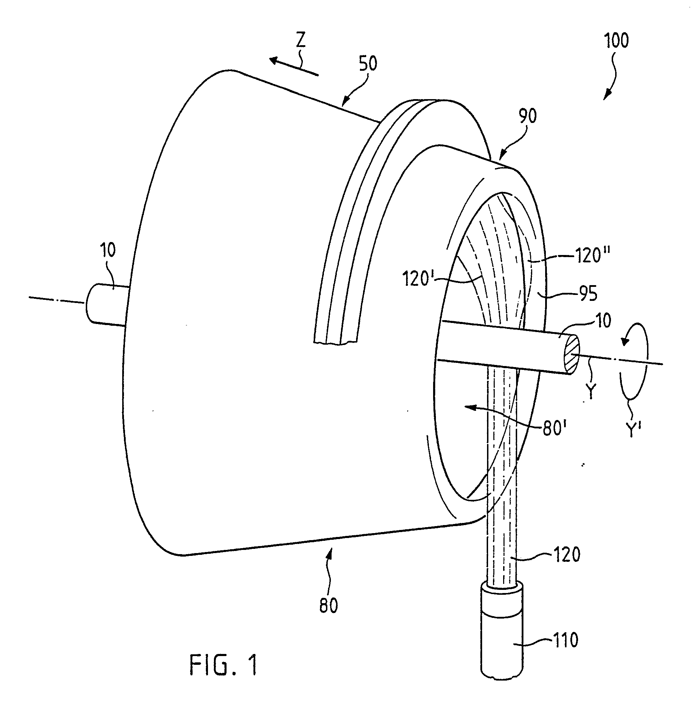

Figur 1 zeigt als allgemeine Übersicht und zur Verdeutlichung der Erfindung eine in schematisch, perspektivischer Ansicht dargestellte Einrichtung zur Energieumwandlung. Die in der Gesamtheit mit 100 bezeichnete und etwa nach dem Prinzip einer sogenannten Freistrahl-Turbine arbeitende Einrichtung wird nachstehend im einzelnen beschrieben.

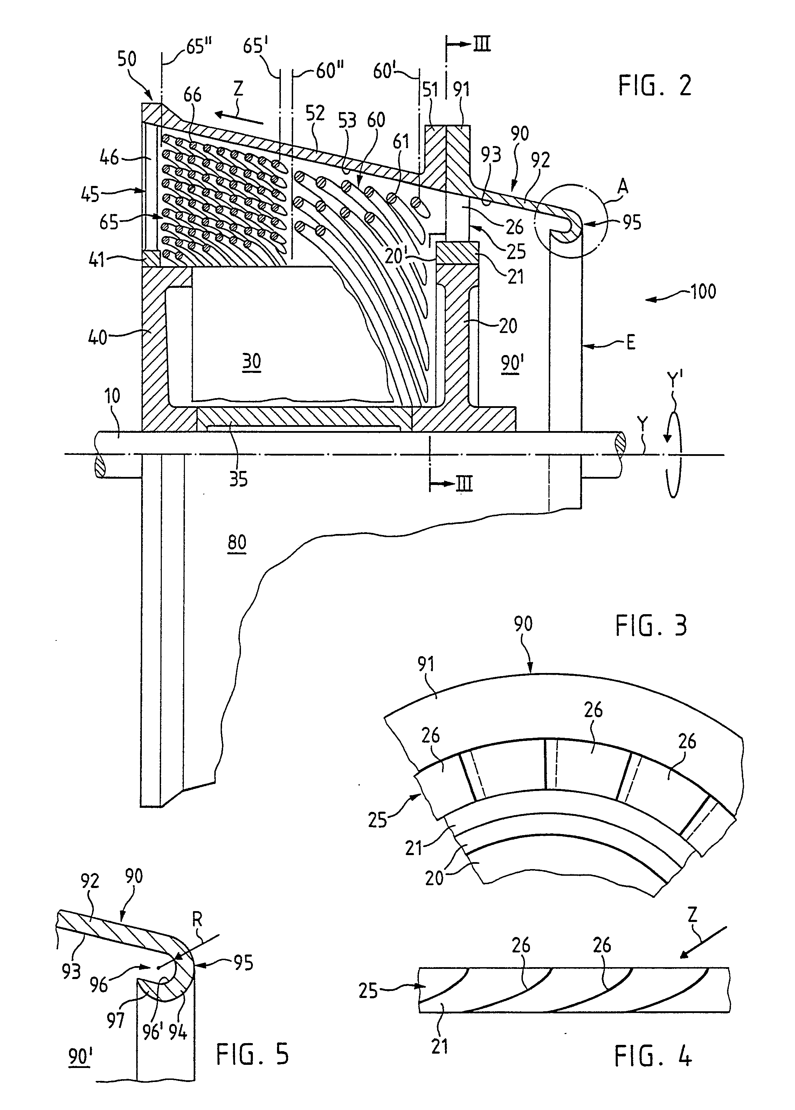

Die im wesentlichen turbinenartig ausgebildete Einrichtung 100 umfasst gemäss dem in Fig.1 und Fig.2 dargestellten Ausführungsbeispiel einen ersten, etwa kegelstumpfartig ausgebildeten Hohlkörper 90, einen zweiten, ebenfalls kegelstumpfartig ausgebildeten Hohlkörper 50 sowie eine die beiden Hohlkörper 50,90 in axialer Richtung durchdringende Welle 10.

Die beiden Hohlkörper 90,50 können auch, wie in Fig.2 schematisch dargestellt, als einstückige, kegelstumpfartig ausgebildete und mit 80 bezeichnete Hohlkörper-Baueinheit ausgebildet sein.

Zur Betätigung der Einrichtung 100 ist, wie in Fig.1 als allgemeine Übersicht dargestellt, ein entsprechend zugeordneter und schematisch dargestellter Düsenkörper 110 vorgesehen, von welchem ein Mediumstrahl, vorzugsweise ein etwa in gebündelter Form aus dem Düsenkörper 110 austretender Wasserstrahl 120 etwa in tangentialer Richtung in den ersten Hohlkörper 90 eingeleitet wird. Der auf diese Weise und in vorgegebener Richtung etwa tangential in den ersten Hohlkörper 90 eintretende Wasserstrahl 120 wird mit geeigneten Mitteln und durch die besondere Formgebung des ersten Hohlkörpers 90 als ein in Fig.1 schematisch dargestellter Wasserstrahl 120′ aufgefächert in eine im wesentlichen kreisförmige Bahn gelenkt. Der etwa in der in Fig.1 dargestellten Formgebung aufgefächerte Wasserstrahl 120′ bewirkt dabei eine am ersten Hohlkörper 90 angreifende erste kinetische Energie für eine Rotationsbewegung der entsprechend miteinander wirkverbundenen Elemente um die mit Y bezeichnete Längsachse der Welle 10 in Pfeilrichtung Y′.

An dieser Stelle sei darauf hingewiesen, dass die im wesentlichen aus mehreren, sich vereinigenden kinetischen Energie-Umformungen zusammensetzende Wirkungsweise der Einrichtung 100 in Verbindung mit den entsprechenden Funktionselementen später noch beschrieben wird.

Fig.2 zeigt die Einrichtung 100, bei welcher ein Teilstück der einen Hälfte in Ansicht und die andere Hälfte in Schnittansicht dargestellt ist und man erkennt den ersten Hohlkörper 90, den zweiten Hohlkörper 50 sowie die koaxial in den beiden Hohlkörpern 50,90 angeordnete und in schematisch dargestellter Weise darin gelagerte Welle 10. Die andere Hälfte der Einrichtung 100 zeigt den schematisch in Ansicht dargestellten, als eine Baueinheit ausgebildeten Hohlkörper 80. Die die beiden Hohlkörper 90,50 oder den einstückig ausgebildeten Hohlkörper 80 in axialer Richtung durchdringende Welle 10 ist beispielsweise in nicht dargestellten Stützelementen, wie Lagerböcken oder dergleichen gelagert, welche Stützelemente oder Lagerböcke im Abstand zueinander zu beiden Seiten der Einrichtung 100 angeordnet werden können.

Die mit den beiden Hohlkörpern 90,50 eine Baueinheit bildende Einrichtung 100 umfasst in der etwa mit Pfeilrichtung Z (Fig.1,2) bezeichneten Durchströmrichtung gesehen ein erstes, im Bereich des ersten Hohlkörpers 90 angeordnetes Stützrad 20 und im Bereich des zweiten Hohlkörpers 50 ein zweites Stützrad 40. Zwischen den beiden Stützrädern 20,40 ist ein Nabenzylinder 30, ein Distanzkörper 35, eine erste Gruppe Drosselstäbe 60 sowie eine zweite Gruppe Drosselstäbe 65 angeordnet. Die beiden, eine Baueinheit bildenden Hohlkörper 90,50 oder der einstückig ausgebildete Hohlkörper 80 sind auf der einen Seite (Wasserstrahl-Eintrittsbereich) mittels einem ersten Leitschaufelkranz 25 auf dem ersten Stützrad 20 und auf der anderen Seite (Wasserstrahl-Austrittsbereich) mittels einem zweiten Leitschaufelkranz 45 auf dem zweiten Stützrad 40 gelagert und damit wirkverbunden.

Die in den beiden Hohlkörpern 50,90 oder in dem einstückig ausgebildeten Hohlkörper 80 angeordneten und damit wirkverbundenen Elemente 20,25,30,35,40,45,60 und 65 werden nachstehend im einzelnen beschrieben:

Der als sogenannte Pralltrommel ausgebildete erste Hohlkörper 90 hat einen kegelstumpfartig ausgebildeten Mantel 92, welcher an dem einen Ende einen radial nach aussen orientierten, kreisringförmigen Flansch 91 und an dem anderen, als Eintrittsöffnung E (Fig.2) für den Wasserstrahl 120 ausgebildeten Ende ein etwa in den Innenraum 90′ des Hohlkörpers 90 orientiertes Umlenkteil 95 aufweist. Der Flansch 91 sowie das Umlenkteil 95 sind vorzugsweise am Hohlkörper 90 angeformt. Die mit 93 bezeichnete Innenwand des Mantels 92 ist als Prallfläche für den im wesentlichen tangential eintretenden Wasserstrahl 120′ (Fig.1) ausgebildet.

In Fig.5 ist das am Mantel 92 des Hohlkörpers 90 vorgesehene und in Fig.2 durch den mit A bezeichneten Kreis markierte Umlenkteil 95 in grösserem Massstab dargestellt. Das Umlenkteil 95 hat einen am Mantelende 92 im Abstand zur Innenwand 93 umgebogenen Rand 94 mit vorzugsweise sich verjüngendem Querschnitt. Im Innenraum 90′ des Hohlkörpers 90 ist das Umlenkteil 95 im Profilquerschnitt klauenartig ausgebildet und hat entsprechend dem Umfang der Wasserstrahl-Eintrittsebene eine kreisringförmige Ausnehmung 96 mit im wesentlichen parallel zum Mantel 92 oder zur Innenwand 93 orientiertem Endstück 97. Die Innenseite 96′ des Umlenkteils 95 ist für eine optimale Umlenkung mit einem der Ausnehmung 96 entsprechend dimensionierten Radius R versehen, an welchen sich das Endstück 97 anschliesst.

Auf der dem Umlenkteil 95 gegenüberliegenden Seite des Hohlkörpers 90 ist, wie in Fig.2 dargestellt, ein Leitschaufelkranz 25 angeordnet, welcher ein kreisringförmiges Kranzstück 21 sowie eine Anzahl gleichmässig am Umfang verteilt angeordnete Leitschaufeln 26 umfasst.

Fig.3 zeigt ein Teilstück des Leitschaufelkranzes 25 in Ansicht gemäss der Schnittlinie III-III in Fig.2, wobei Fig.4 eine Draufsicht des Leitschaufelkranz-Teilstücks zeigt und man erkennt das Kranzstück 21 sowie eine Anzahl der gleichmässig am Umfang verteilt angeordneten Leitschaufeln 26.

Der beim Auftreffen auf die Innenwand 93 des Hohlkörpers 90 sich auffächernde Wasserstrahl 120′ wird etwa mit der in Fig.4 angedeuteten Pfeilrichtung Z′ (Fig.4) auf die einzelnen Leitschaufeln 26 gelenkt. Die Leitschaufeln 26 sind vorzugsweise so ausgebildet, dass dem aufgefächert auf die Leitschaufeln 26 geleiteten Wasserstrahl 120′ aufgrund der Leitschaufel-Formgebung ohne nennenswerten Energieverlust wieder eine einheitliche Richtung gegeben wird, welche weitgehend der Umlauf- oder Strömungsrichtung des Wasserstrahls an der Innenwand 93 des Mantels 92 entspricht. Der Leitschaufelkranz 25 kann einerseits mit den Leitschaufeln 26 an der Innenwand 93 des Mantels 92 und andererseits am ersten Stützrad 20 mit nicht näher dargestellten Mitteln, wie zum Beispiel mittels einer Schraubverbindung lösbar befestigt werden.

Der erste, als Pralltrommel ausgebildete Hohlkörper 90, das Stützrad 20 sowie der Leitschaufelkranz 25 bilden im wesentlichen eine Baueinheit und können auch, wie in Fig.2 schematisch dargestellt, einstückig ausgebildet sein. Bei einer nicht dargestellten Variante sind die Leitschaufeln 26 entsprechend dem Aufprallwinkel sowie des gemäss Pfeilrichtung Z′ auf die Leitschaufeln 26 gelenkten Wasserstrahls 120,120′ einstellbar und mit nicht dargestellten Mitteln in ihrer Lage oder Position fixierbar.

Der zweite, als Drosseltrommel ausgebildete Hohlkörper 50 hat, wie in Fig.2 dargestellt, ebenfalls einen kegelstumpfartig ausgebildeten Mantel 52 mit Innenwand 53, welcher Mantel 52 in seiner inneren und äusseren Formgebung, und zwar mit gleichem Kegelwinkel, im wesentlichen dem Mantel 92 des ersten Hohlkörpers 90 entsprechend angepasst ist.

An dem zweiten Hohlkörper 50 ist auf der dem Flansch 91 des ersten Hohlkörpers 90 zugewandten Seite ein Flansch 51 vorgesehen. Die Flanschen 91 und 51 der beiden Hohlkörper 90 und 50 sind durch eine nicht näher dargestellte Schraubverbindung oder dergleichen lösbar miteinander verbunden.

Weiterhin erkennt man in Fig.2 den schematisch dargestellten und mit dem Hohlkörper 50 wirkverbundenen Leitschaufelkranz 45, welcher einerseits mittels einem ringförmigen Kranzstück 41 mit dem zweiten Stützrad 40 und andererseits mittels entsprechend ausgebildeter, nicht näher dargestellter Stütz- oder Blattspeichen 46 mit dem Hohlkörper 50 wirkverbunden ist.

In dem Hohlkörper 50 sind die entsprechend ausgebildeten Drosselstabgruppen 60,65 angeordnet, deren Wirkung in Verbindung mit der Arbeits- oder Wirkungsweise der kompletten Einrichtung 100 beschrieben wird.

Im dargestellten Ausführungsbeispiel ist, wie in Fig.2 dargestellt, in dem Hohlkörper 50 die erste, in der Gesamtheit mit 60 bezeichnete Drosselstabgruppe sowie die zweite, in der Gesamtheit mit 65 bezeichnete Drosselstabgruppe angeordnet. Die beiden Drosselstabgruppen 60 und 65 bilden in Durchflussrichtung Z gesehen je eine durch strichpunktierte Linien schematisch dargestellte, vordere Spiralebene 60′,65′ sowie je eine hintere Spiralebene 60″,65″. Die erste Drosselstabgruppe 60 ist mit der ersten Spiralebene 60′ unmittelbar im Bereich der Leitschaufeln 26 des ersten Leitschaufelkranzes 25 beziehungsweise im Bereich der Vorderkanten 20′ des ersten Stützrades 20 angeordnet und reicht mit der zweiten Spiralebene 60″, in axialer Richtung gesehen, etwa bis in die Mitte des zweiten Hohlkörpers 50. Die zweite Drosselstabgruppe 65 schliesst sich mit der ersten Spiralebene 65′ vorzugsweise direkt an die Spiralebene 60″ der ersten Drosselstabgruppe 60 an und erstreckt sich bis zu der zweiten Spiral ebene 65″ beziehungsweise bis etwa zu den Blattspeichen 46 des zweiten Leitschaufelkranzes 45 im vorderen Bereich (Wasserstrahl-Austritt) des Hohlkörpers 50. Die beiden Drosselstabgruppen 60 und 65 sind mittels entsprechend ausgebildeter, in Fig.2 nicht näher dargestellter Elemente einer Haltevorrichtung am Nabenzylinder 30 befestigt und damit wirkverbunden.

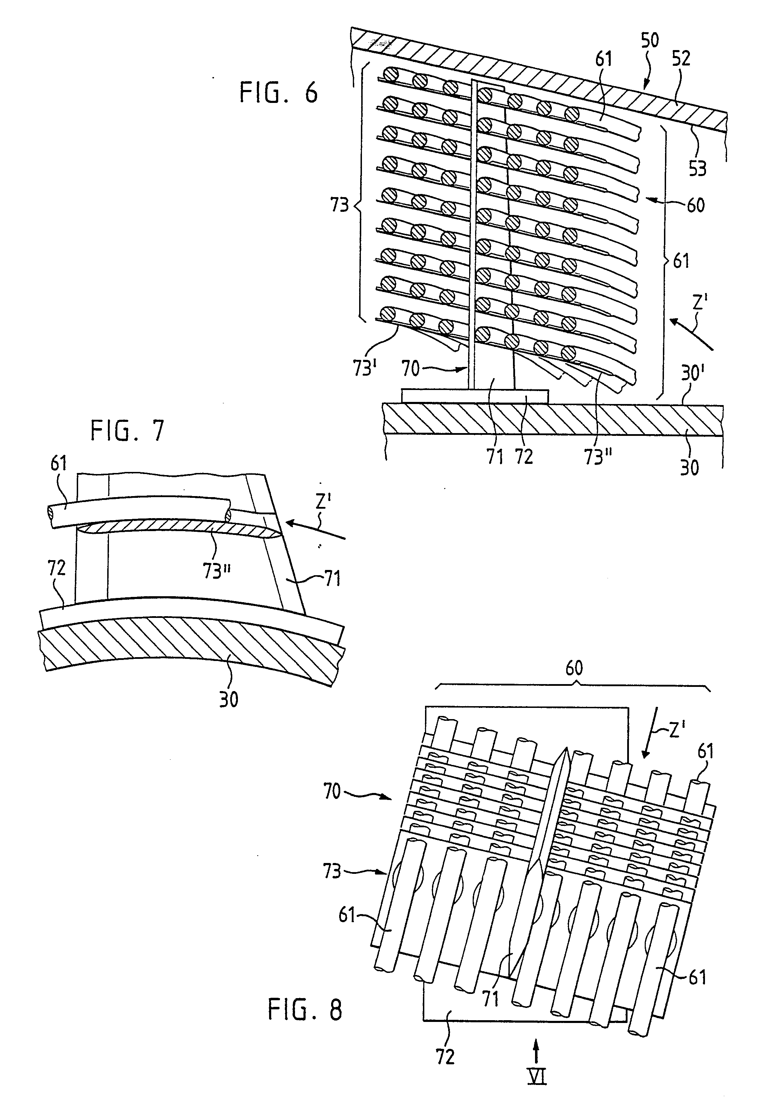

Zur Halterung der einzelnen Drosselstabgruppe 60 oder 65 sind vorzugsweise mehrere und im dargestellten Ausführungsbeispiel mit dem Nabenzylinder 30 wirkverbundene Haltevorrichtungen vorgesehen, welche einerseits gleichmässig am Umfang verteilt und andererseits in axialer Richtung zwischen den Spiralebenen 60′,60″ beziehungsweise 65′,65″ im Abstand zueinander am Nabenzylinder 30 angeordnet sind. Ein Ausführungsbeispiel der als Einzelheit dargestellten Haltevorrichtung wird nachstehend anhand der Figuren 6,7 und 8 beschrieben:

Fig.6 zeigt eine schematisch und in Ansicht gemäss Pfeilrichtung VI in Fig.8 dargestellte Haltevorrichtung 70 und man erkennt einen Ausschnitt der gemäss Pfeilrichtung Z′ im wesentlichen in Strömungsrichtung der Wasserspirale 120′ (Fig.1) orientierten Drosselstabgruppe 60, ein Haltestück 71, welches mittels einer Platte 72 am Nabenzylinder 30 angeordnet und mit nicht dargestellten Mitteln, beispielsweise durch eine Schraubverbindung, am Nabenzylinder 30 lösbar befestigt ist. An dem einzelnen, stammartig ausgebildeten und in bezug zur äusseren Wand 30' des Nabenzylinders 30 radial nach aussen gerichteten Haltestücks 71 sind mehrere Auflageteile 73 angeordnet und in nicht dargestellter Weise befestigt. Das einzelne Auflageteil 73 umfasst im dargestellten Ausführungsbeispiel zu beiden Seiten des Haltestücks 71 angeordnete Teilstücke 73' und 73", welche vorzugsweise im Abstand zueinander, übereinanderliegend sowie im wesentlichen parallel zur Innenwand 53 des Hohlkörpers 50 verlaufend an dem Haltestück 71 angeordnet sind. Die einzelnen, in radialer Richtung bis etwa zur Innenwand 53 des Mantels 52 reichenden Auflageteile 73 sind zur Aufnahme der aus einer Anzahl Drosselstäbe 61 gebildeten Drosselstabgruppe 60 ausgebildet. Die Anzahl der Haltevorrichtungen 70 ist abhängig von der Ausgestaltung und Dimension der einzelnen Drosselstabgruppe 60 oder 65.

Das einzelne Haltestück 71 mit den daran angeordneten Auflageteilen 73 ist in Abhängigkeit der Windungszahl der jeweiligen Drosselstabgruppe sowie entsprechend dem Strömungsverlauf an der Platte 72 und zusammen mit der Platte 72 am Nabenzylinder 30 befestigt. Die Windungszahl der einzelnen Drosselstabgruppe 60 oder 65 steht in direktem Zusammenhang mit der zu übertragenden kinetischen Energie und ist abhängig vom Abstand zwischen den beiden Spiralebenen 60' und 60" beziehungsweise 65' und 65" der Drosselstabgruppen. Der Abstand der einzelnen, umströmten Drosselstäbe 61 oder 66 zueinander entspricht etwa dem Durchmesser des jeweiligen Drosselstabes. Weiterhin können die einzelnen Drosselstäbe 66 der Drosselstabgruppe 65 einen geringeren Durchmesser aufweisen und die Windungszahl grösser als die der ersten Drosselstabgruppe 60 sein. Die einzelnen Drosselstäbe 66 können ferner zur besseren Energieaufnahme mit wellenförmiger oder speziell ge schliffener Oberfläche versehen sein.

Fig.7 zeigt ein teilweise im Schnitt dargestelltes Teilstück der Haltevorrichtung 70 und man erkennt den Nabenzylinder 30, das Haltestück 71 mit der Platte 72 sowie das entsprechend der Strömungsrichtung Z' der Wasserspirale 120' stromlinienförmig ausgebildete und etwa im Profilquerschnitt dargestellte Teilstück 73' des unteren Auflageteils 73 mit einem Teilstück des darauf gelagerten Drosselstabs 61.

In Fig.8 ist ein Teilstück der Haltevorrichtung 70 in Draufsicht dargestellt und man erkennt entsprechend der Strömungsrichtung Z' der Wasserspirale 120' (Fig.1) das etwa im Profilquerschnitt ebenfalls stromlinienförmig ausgebildete und im Schnitt dargestellte Haltestück 71, die übereinanderliegenden Auflageteile 73 sowie einen der im Abstand zueinander angeordneten Drosselstäbe 61.

Die Wirkungsweise der Einrichtung wird nachstehend beschrieben:

Die beispielsweise als eine kegelstumpfartige Baueinheit ausgebildete Einrichtung 100 wird vorzugsweise in einer ersten Phase mit nicht näher dargestellten Mitteln für eine um die Achse Y der Welle 10 orientierte Rotationsbewegung angetrieben. In einer zweiten Phase wird der bereits rotierenden Einrichtung 100 von dem entsprechend zugeordneten Düsenkörper 110 (Fig.1) zur Erreichung einer maximalen Drehzahl für die eigentliche Energieumwandlung der schräg tangential auf die Innenwand 93 des Mantels 92 gerichtete Wasserstrahl zugeführt.

Der dabei mit relativ hoher Geschwindigkeit und unter entsprechendem Aufprallwinkel auf die Innenwand 93 des ersten Hohlkörpers 90 treffende Wasserstrahl 120 wird aufgrund der entgegenwirkenden Kräfte zu einem etwa flächigen Wasserstrom 120, beziehungsweise zu einer in Fig.1 schematisch dargestellten, sich fächerartig öffnenden, rotierenden Wasserspirale 120',120" geformt. Die rotierende Wasserspirale 120',120" wird dabei im wesentlichen durch die Wirkung der Zentrifugalkraft peripherisch an die Innenwand 93 des Mantels 92 gedrückt und entsprechend dem Kegelwinkel des Mantels 92 dem Leitschaufelkranz 25 zugeführt.

Zur Vermeidung einer weiteren, unerwünschten Auffächerung der Wasserspirale 120',120" im Bereich des ersten Hohlkörpers 90 ist auf der Wasserstrahl-Eintrittseite E (Fig.2) das Umlenkteil 95 (Fig.5) und auf der gegenüberliegenden Seite der Leitschaufelkranz 25 vorgesehen. Das Umlenkteil 95 sowie die entsprechend ausgebildeten und angeordneten Leitschaufeln 26 (Fig.3,4) des Leitschaufelkranzes 25 bewirken, dass die Wasserspirale 120',120" ohne eine weitere, wesentliche Auffächerung über die erste Drosselstabgruppe 60 und anschliessend über die zweite Drosselstabgruppe 65 geleitet wird.

Die spiralförmig und in Längsrichtung des zweiten Hohlkörpers 50 sich erstreckenden Drosselstabgruppen 60,65 bilden zusammen eine relativ grosse Berührungsfläche und sind so ausgebildet und zueinander angeordnet, dass der im wesentlichen tangential der Einrichtung 100 beziehungsweise dem ersten Hohlkörper 90 zugeführte Wasserstrom 120 beziehungsweise die beim Aufprall gebildete Wasserspirale 120',120" in viele kleine Wasserteilchen zerlegt und dabei die kinetische Energie des Wasserstrahls (Wasserspirale 120',120") einerseits von dem Leitschaufelkranz 25 und andererseits von den beiden Drosselstabgruppen 60,65 weitgehend verlustfrei auf die damit wirkverbundenen Teile 20,30 und 40 sowie auf die Welle 10 und von der Welle 10 zur Übertragung einer nutzbaren Leistung auf ein entsprechend zugeordnetes Aggregat (nicht dargestellt) übertragen wird.

Durch die Formgebung der einzelnen Elemente 25,60 und 65 mit den daran angeordneten Einzelteilen wird die Geschwindigkeit der Wasserteilchen soweit verringert und als kinetische Energie an die entsprechenden Elemente abgegeben, dass die Geschwindigkeit des verbleibenden und im Bereich des zweiten Leitschaufelkranzes 45 aus dem zweiten Hohlkörper 50 austretenden Wasserstrahls (nicht dargestellt) geringfügig über der Rotationsgeschwindigkeit der gesamten Einrichtung 100 liegt.

**Ansprüche**

1. Verfahren zur Energieumwandlung, insbesondere unter Verwendung eines im wesentlichen von einem zugeführten Wasserstrahl oder dergleichen rotierend angetriebenen Hohlkörpers, welcher mit einer um ihre Längsachse drehbar gelagerten Welle sowie mit entsprechend im Hohlkörper angeordneten Leit- und Drosselelementen zur Umwandlung einer kinetischen Energie in ein Drehmoment in Wirkverbindung steht, dadurch gekennzeichnet, dass der Wasserstrahl (120) schräg tangential in den Hohlkörper (80 oder 90) eingeleitet und beim Aufprall auf eine entsprechend ausgebildete Innenwand (93) des Hohlkörpers (80 oder 90) als eine rotierende, sich in axialer Richtung des Hohlkörpers bewegende Wasserspirale (120') mindestens einem mit der Welle (10) wirkverbundenen und zur Umwandlung der kinetischen Energie in ein Drehmoment ausgebildeten Leit-und/oder Drosselelement (25,60,65) zugeführt und mit ausreichender Restenergie aus dem Hohlkörper (80) oder einem mit dem ersten Hohlkörper (90) wirkverbundenen zweiten Hohlkörper (50) abgeleitet wird.

2. Verfahren zur Energieumwandlung nach Anspruch 1, dadurch gekennzeichnet, dass die Einrichtung (100) in einer ersten Phase mit entsprechenden Mitteln um die Längsachse (Y) der Welle (10) in Rotation gebracht wird, und dass in einer zweiten Phase zur Erreichung einer maximalen Drehzahl der Wasserstrahl (120) schräg tangential in den Hohlkörper (80 oder 90) eingeleitet und durch entsprechend angeordnete Mittel (25) in eine einheitliche Richtung gebracht wird.

3. Verfahren zur Energieumwandlung nach Anspruch 1 und 2, dadurch gekennzeichnet, dass der schräg tangential in den Hohlkörper (80 oder 90) eingeleitete Wasserstrahl (120) als peripherisch rotierende Wasserspirale (120',120") den Leit-und Drosselelementen (25,60,65) zugeführt wird.

4. Einrichtung (100) zur Durchführung des Verfahrens nach Anspruch 1, welche einen zur Einleitung eines Wasserstrahls ausgebildeten und mit einer um ihre Längsachse drehbar gelagerten Welle wirkverbundenen Hohlkörper umfasst, dadurch gekennzeichnet, dass der Hohlkörper (80) kegelstumpfartig und im Bereich des kleineren Durchmessers zur schräg, tangentialen Einleitung des Wasserstrahls (120) ausgebildet ist und in seinem Innenraum (80') im Abstand zum Aufprallbereich des Wasserstrahls (120) einen dem aufgefächerten Wasserstrahl (120') eine einheitliche Richtung gebenden ersten Leitschaufelkranz (25) sowie im Abstand dazu mindestens eine Drosselstabgruppe (60,65) aufweist, wobei der Hohlkörper (80), der erste Leitschaufelkranz (25), die Drosselstabgruppe (60,65) sowie ein zweiter Leitschaufelkranz (45) als eine um die Längsachse (Y) der Welle (10) rotierend angetriebene Baueinheit (100) zur Abgabe eines Drehmoments ausgebildet sind.

5. Einrichtung nach Anspruch 4, dadurch gekennzeichnet, dass der Hohlkörper (80) zweiteilig ausgebildet ist und einen ersten, kegelstumpfartig ausgebildeten und mittels dem ersten Leitschaufelkranz (25) auf einem ersten Stützrad (20) gelagerten Hohlkörper (90) sowie einen zweiten, kegelstumpfartig ausgebildeten und mittels dem zweiten Leitschaufelkranz (45) auf einem zweiten Stützrad (40) gelagerten Hohlkörper (50) umfasst, und dass die beiden Hohlkörper (90,50) den gleichen Kegelwinkel aufweisen und durch eine Flanschverbindung (91, 51) miteinander wirkverbunden sind.

6. Einrichtung nach Anspruch 4 und 5, dadurch gekennzeichnet, dass der erste Hohlkörper (90) auf der Eintrittsseite (E) des Wasserstrahls (120) mit einem dem aufgefächerten Wasserstrahl (120') eine einheitliche Richtung gebenden, klauenartig ausgebildeten Umlenkteil (95) und auf der gegenüberlie genden Seite mit dem am ersten Stützrad (20) angeordneten Leitschaufelkranz (25) versehen ist, wobei die genannten Teile (90,95,20,25) vorzugsweise als eine einstückige, mit der Welle (10) wirkverbundene Baueinheit ausgebildet ist.

7. Einrichtung nach Anspruch 4 und 5, dadurch gekennzeichnet, dass in dem zweiten Hohlkörper (50) unmittelbar im Anschlussbereich des ersten Hohlkörpers (90) die erste Drosselstabgruppe (60) und im Anschluss daran die zweite Drosselstabgruppe (65) sowie der zweite mit dem Stützrad (40) wirkverbundene Leitschaufelkranz (45) angeordnet ist, und dass die beiden Drosselstabgruppen (60,65) je mit mindestens einer Haltevorrichtung (70) an einem Nabenzylinder (30) angeordnet und in bezug zur Richtung des Wasserstrahls einstellbar am Nabenzylinder (30) befestigt und die genannten Teile (40,45, 50,60,65,70,30) vorzugsweise als eine mit der Welle (10) wirkverbundene Baueinheit ausgebildet sind.

8. Einrichtung nach Anspruch 7, dadurch gekennzeichnet, dass der einzelne Stab (61) der ersten Drosselstabgruppe (60) im Profilquerschnitt grösser als der einzelne Stab (66) der zweiten Drosselstabgruppe (65) ausgebildet ist, und dass die einzelnen Stäbe (66) im Endbereich der zweiten Drosselstabgruppe (65) zur Aufnahme und Übertragung der in diesem Bereich bereits geringeren kinetischen Energie des Wasserstrahls mit wellenförmiger oder entsprechend angeschliffener Oberfläche versehen sind.

9. Einrichtung nach Anspruch 4, dadurch gekennzeichnet, dass die einzelne Drosselstabgruppe (60,65) als ein von der Wasserspirale (120´,120´´) umströmter und aus einer Vielzahl von Drosselstäben (61,66) gebildeter, sich in Längsrichtung des zweiten Hohlkörpers (50) oder des entsprechenden Bereichs des einstückigen Hohlkörpers (80) erstreckender und im wesentlichen mit der Welle (10) wirkverbundener Spiralkörper ausgebildet ist.

10. Einrichtung nach Anspruch 4, dadurch gekennzeichnet, dass die beiden Drosselstabgruppen (60,65) jeweils mittels etwa stromlinienförmig ausgebildeter Elemente (71,73) der Haltevorrichtung (70) an dem mit der Welle (10) wirkverbundenen Nabenzylinder (30) angeordnet sind.

FIG. 1

FIG. 2

FIG. 3

FIG. 5

FIG. 4

EP 0 373 310 A1

FIG. 6

FIG. 7

FIG. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A- 864 466 (FUCHS)<br>* Seite 1, Zeile 45 - Seite 2, Zeile 42 *<br>--- | 1,3,4 | F 03 B 3/00<br>F 03 B 3/08 |
| A | CH-A- 105 567 (EDNEY)<br>* Seite 1, rechte Spalte, Zeile 3 - Seite 2, rechte Spalte, Zeile 30; Abb. 2 *<br>--- | 1,5,7,8,9,10 | |
| A | FR-A-2 603 069 (SOROKINE)<br>* Zusammenfassung *<br>--- | 1,3 | |
| A | FR-A- 363 648 (SCHMIEDICKE)<br>* Seite 1, Zeile 51 - Seite 2, Zeile 56 *<br>----- | 1 | |

**RECHERCHIERTE SACHGEBIETE (Int. Cl.5)**

F 03 B

Der vorliegende Recherchenbericht wurde für alle Patentansprüche erstellt

| Recherchenort | Abschlußdatum der Recherche | Prüfer |
|---|---|---|
| DEN HAAG | 08-03-1990 | DE WINTER P.E.F. |